# EUROPÄISCHE PATENTSCHRIFT

(11) **EP 2 937 589 B1**
(45) Veröffentlichungstag und Bekanntmachung des Hinweises auf die Patenterteilung: **10.01.2018**
(21) Anmeldenummer: 15158922.3
(22) Anmeldetag: 13.03.2015
(51) Int. Cl.: F16D 25/12

(54) **Kupplungsbetätigungsanordnung**
Clutch actuation assembly
Système d'actionnement d'embrayage

(30) Priorität: 31.03.2014 DE 102014205959
(43) Veröffentlichungstag der Anmeldung: 28.10.2015
(73) Patentinhaber: Schaeffler Technologies AG & Co. KG, 91074 Herzogenaurach (DE)
(72) Erfinder: Barrera, Alan, 76133 Karlsruhe (DE); Honselmann, Sebastian, 77886 Lauf (DE)

(56) Entgegenhaltungen:
- EP-A1- 2 600 021
- DE-A1-102006 057 183
- US-A1- 2007 205 072

## Beschreibung

Die Erfindung betrifft eine Kupplungsbetätigungsanordnung, mit dessen Hilfe die Bewegung eines fußbetätigten Kupplungspedals in einen Betätigungsdruck zum Betätigen einer Kupplung zum Kuppeln einer Antriebswelle eines Kraftfahrzeugmotors mit mindestens einer Getriebeeingangswelle eines Kraftfahrzeuggetriebes umgesetzt werden kann.

Eine übliche Kupplungsbetätigungsanordnung für ein Handschaltgetriebe weist einen Geberzylinder und einen in dem Geberzylinder axial geführten Geberkolben auf, wobei der Geberkolben starr mit einem Kupplungspedal verbunden ist. Wenn der Fahrer einen Kupplungsvorgang einleiten möchte, beispielsweise um in einen anderen Getriebegang zu schalten, kann der Fahrer das Kupplungspedal treten, wodurch der Geberkolben in den Geberzylinder hineingedrückt wird, um einen entsprechenden Betätigungsdruck für die Kupplung aufzubauen.

Zur Erhöhung des Fahrkomforts ist es bekannt die Kupplung automatisch zu betätigen, indem das Kupplungspedal weggelassen wird und ein Automatikgetriebe für den Antriebsstrang des Kraftfahrzeugs vorgesehen wird. Jedoch kann es vom Fahrer gewünscht sein erforderlichenfalls selber zu kuppeln und/oder selber zu schalten und dies nicht einem Automatiksystem zu überlassen.

In dem Dokument US 2007/205072 A1 ist ein System für eine hydraulische Steuerung einer Kupplung offenbart, bei dem ein Geberzylinder mittels einer Leitung mit einem Nehmerzylinder verbunden ist. Das System enthält einen Servozylinder, der zwischen dem Geber- und dem Nehmerzylinder in der Leitung angeordnet ist. Der Servozylinder enthält mindestens einen Kolben, der zur Erzeugung einer Hilfskraft dient.

Auch die Offenlegungsschriften EP 2 600 021 A1 und DE 10 2006 057 183 A1 zeigen hydraulische Kupplungsbestätigungssysteme, welche neben einem üblichen Geber- und Nehmerzylinder einen zusätzlichen aktorbetätigten Geberzylinder aufweisen, mit dessen Hilfe eine Kupplungsbetätigung unabhängig von dem ersten Geberzylinder vorgenommen werden kann.

Es ist die Aufgabe der Erfindung Maßnahmen aufzuzeigen, die ein komfortables Schalten eines Handschaltgetriebes ermöglichen ohne dem Fahrer des Kraftfahrzeugs die Möglichkeit zum eigenen Eingreifen zu nehmen.

Die Lösung der Aufgabe erfolgt erfindungsgemäß durch eine Kupplungsbetätigungsanordnung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Kupplungsbetätigungsanordnung zum Betätigen einer Kupplung zum Kuppeln einer Antriebswelle eines Kraftfahrzeugmotors mit mindestens einer Getriebeeingangswelle eines Kraftfahrzeuggetriebes, vorgesehen mit einem über ein Kupplungspedal fußbetätigbaren Geberzylinder zur Aufbringung eines hydraulischen und/oder pneumatischen Drucks, einem hydraulisch an dem Geberzylinder angeschlossenen Nehmerzylinder zum Öffnen und/oder Schließen der Kupplung, einem hydraulisch zwischen dem Geberzylinder und dem Nehmerzylinder angeordneten Zwischenzylinder zur Aufbringung eines hydraulischen und/oder pneumatischen Betätigungsdrucks zum Betätigen der Kupplung, einem in dem Zwischenzylinder geführten Zwischenkolben, wobei an dem Zwischenkolben der Geberzylinder hydraulisch angreift, und einem an dem Zwischenkolben angreifenden Automatikaktor zum Verlagern des Zwischenkolbens in dem Zwischenzylinder. Dabei ist der Automatikaktor im Wesentlichen konzentrisch innerhalb eines mit dem Geberzylinder verbundenen Ringzylinder angeordnet, wobei in dem Ringzylinder ein an dem Zwischenkolben angreifbarer Ringkolben geführt ist. Dadurch ergibt sich eine besonders kompakte und bauraumsparende Anordnung, die leicht als separate Baueinheit in Form eines Zwischenblocks in einer herkömmlichen Kupplungsbetätigungsanordnung nachgerüstet werden kann und/oder in einem bestehenden Design integriert werden kann. Vorzugsweise sind der Automatikaktor und/oder der Ringzylinder konzentrisch zum Zwischenkolben angeordnet, so dass eine lineare Bewegung des Automatikaktors beziehungsweise des Ringkolbens nicht über zwischengeschaltete Bauteile übersetzt werden braucht. Stattdessen können der Automatikaktor und/oder der Ringkolben direkt in axialer Richtung an dem Zwischenkolben angreifen.

Mit Hilfe des Automatikaktors kann bei einem Handschaltgetriebe die Funktionsweise eines Automatikgetriebes abgebildet werden. Der Automatikaktor kann in entsprechenden beispielsweise von einer Motor- und/oder Getriebesteuerung detektierten Situationen ein Betätigen der Kupplung einleiten. Beispielsweise kann infolge einer an einem Schaltknüppel angreifenden Kraft der Hand des Fahrers ein Schaltwunsch detektiert werden, infolgedessen der Automatikaktor automatisch die Kupplung öffnet, um eine Beschädigung des Kraftfahrzeuggetriebes zu vermeiden. Ferner kann beispielsweise bei einer detektierten zu niedrigen Drehzahl der Automatikaktor automatisch die Kupplung öffnen, um ein Abwürgen des Kraftfahrzeugmotors zu vermeiden. Ferner kann nach einer individuell eingeschalteten Fahrstrategie, beispielsweise ein besonders verbrauchsarmer Betrieb, der Automatikaktor unterstützend die am besten geeigneten Schaltpunkte vorgeben und die Kupplung automatisch betätigen. Ebenfalls ist es möglich, dass der Fahrer wahlweise zwischen einem Automatikmodus, in dem mit Hilfe des an dem Geberkolben angreifenden Automatikaktors ein automatisches Schalten des Kraftfahrzeuggetriebes erfolgt, und einem Fußbetätigungsmodus, in dem der Automatikaktor deaktiviert ist und nur der Fahrer ein Betätigen der Kupplung vornehmen kann, wunschgemäß wechseln kann. Dadurch kann das Kraftfahrzeug sowohl für Fahrer, die ein Handschaltgetriebe gewohnt sind, als auch für Fahrer, die ein Automatikgetriebe gewohnt sind, komfortabel gefahren werden. Gleichzeitig kann der Fahrer unabhängig von dem Automatikaktor selber die Kupplung betätigen, indem der Fahrer durch ein Treten eines Kupplungspedals den Geberzylinder betätigt und über die hydraulische Koppelung des Geberzylinders mit dem Zwischenkolben an dem Zwischenkolben angreift und dadurch die Kupplung betätigt. Im Vergleich zu einer herkömmlichen Kupplungsbetätigungsanordnung für ein Handschaltgetriebe ist lediglich der Zwischenzylinder und der Zwischenkolben in der hydraulischen Strecke zwischengeschaltet, wodurch jedoch im Wesentlichen keine signifikanten Wirkungsgradverluste zu erwarten sind und sich die Wirkungsweise der erfindungsgemäßen Kupplungsbetätigungsanordnung beim manuellen Betrieb mit Hilfe des Kupplungspedals und des Geberzylinders von der Wirkungsweise einer herkömmlichen Kupplungsbetätigungsanordnung nicht signifikant unterscheidet. Der Fahrer kann trotz des vorgesehenen Automatikaktors bei Bedarf selber kuppeln und/oder selber schalten und in die Schaltstrategie des Kraftfahrzeugs wunschgemäß eingreifen. Hierbei kann der Fahrer beispielsweise eine Betätigung beziehungsweise eine nicht erfolgte Betätigung der Kupplung durch den Automatikaktor überstimmen ("overrule"), so dass bei widersprüchlichen Aktionen die Vorgehensweise des Fahrers priorisiert ist. Insbesondere ist es möglich den Zwischenzylinder an einer im Wesentlichen beliebigen Stelle innerhalb der hydraulischen Strecke zwischen dem Geberzylinder und dem Nehmerzylinder vorzusehen, so dass der Zwischenzylinder leicht bei einem bestehenden konstruktiven Design in einen vorhandenen Bauraum eingepasst werden kann. Dies ermöglicht ein hohes Ausmaß an konstruktiven Freiheiten, um mit Hilfe des Zwischenzylinders und des Automatikaktors einen Komfortgewinn für den Fahrer zu realisieren. Wenn der Fahrer ein komfortables Schalten ohne Treten des Kupplungspedals wünscht, kann der Automatikaktor die Kupplung automatisch betätigen und gegebenenfalls einen Schaltvorgang einleiten, wobei dem Fahrer gleichzeitig die Möglichkeit offen gehalten wird durch ein manuelles Treten des Kupplungspedals unabhängig vom Automatikaktor die Kupplung zu betätigen, so dass durch eine konstruktiv leicht umsetzbare Anordnung des Zwischenzylinders und des Automatikaktors ein komfortables Schalten eines Handschaltgetriebes ermöglicht ist ohne dem Fahrer des Kraftfahrzeugs die Möglichkeit zum eigenen Eingreifen zu nehmen.

In dem Geberzylinder kann insbesondere ein Fluid, vorzugsweise ein Hydrauliköl, von dem Geberkolben komprimiert werden, um einen entsprechend hohen Druck aufzubauen, um den Zwischenkolben in den Zwischenzylinder einzufahren. Der Zwischenzylinder kann mit einem Betätigungssystem hydraulisch verbunden sein, wobei das Betätigungssystem insbesondere mindestens einen Nehmerzylinder aufweist, in dem ein Betätigungskolben axial geführt ist. Bei einem ansteigenden Druck im Zwischenzylinder kann auch der Druck im Nehmerzylinder ansteigen und dadurch den Betätigungskolben ausfahren, der direkt oder indirekt, beispielsweise über eine als Tellerfeder ausgestaltete Hebelfeder, an einer Anpressplatte einer Reibungskupplung angreifen kann, um eine mit einer Getriebeeingangswelle drehfest verbundene Kupplungsscheibe zu verpressen. Der Zwischenzylinder kann insbesondere eine Rückstellfeder aufweisen, die bei einem Einfahren des Zwischenkolbens in den Zwischenzylinder entlang einer Betätigungsrichtung eine Rückstellkraft bereitstellt, um den Zwischenkolben bei einem Nachlassen oder Wegfallen der vom Fahrer oder vom Automatikaktor in Betätigungsrichtung aufgeprägten Verlagerungskraft entgegen der Betätigungsrichtung in eine einem unbetätigten Zustand entsprechende Kolbenausgangsstellung des Zwischenkolbens zurückzuverlagern. Durch den in dem Zwischenzylinder geführten Zwischenkolben kann die Kupplungsbetätigungsanordnung in ein dem Geberzylinder zugeordnetes hydraulisches oder pneumatisches Teilsystem und ein dem Nehmerzylinder zugeordnetes hydraulisches oder pneumatisches Teilsystem getrennt werden, wobei in beiden Teilsystemen das gleiche Fluid oder ein unterschiedliches Fluid vorgesehen sein kann.

Vorzugsweise ist vorgesehen, dass der Ringkolben bei einer Bewegung in Betätigungsrichtung zum Druckaufbau in dem Zwischenzylinder an dem Zwischenkolben anschlägt und bei einer Bewegung entgegen der Betätigungsrichtung relativ zum Zwischenkolben axial bewegbar ist. Dadurch kann der Ringkolben nur in Betätigungsrichtung eine Kraft auf den Zwischenkolben ausüben. Wenn der Zwischenkolben von dem Automatikaktor axial verlagert wird, braucht der Ringkolben nicht mitbewegt werden, so dass unnötige Schleppmomente vermieden sind. Dadurch kann insbesondere vermieden werden, dass bei einer Betätigung der Kupplung mit Hilfe des Automatikaktors ein Unterdruck in dem Geberzylinder entsteht, infolgedessen ein in dem Geberzylinder geführter Geberkolben in den Geberzylinder einzogen wird und ein mit dem Geberkolben gekoppeltes Kupplungspedal verschwenkt wird. Insbesondere kann eine erste Kontaktfläche des Ringkolbens bei einer Betätigung der Kupplung durch den Automatikaktor von einer korrespondierenden Gegenfläche des Zwischenkolbens abheben und dadurch relativ zum Zwischenkolben verlagert werden.

Besonders bevorzugt greift der Automatikaktor an einer axialen Stirnseite des Zwischenkolbens an. Dadurch kann eine sowieso beim Zwischenkolben vorgesehene Fläche von dem Automatikaktor genutzt werden, um eine Kraft zum Betätigen der Kupplung einzuleiten. Der Automatikaktor kann dadurch direkt an dem Zwischenkolben angreifen, so dass zwischengeschaltete Bauteile vermieden sind. Eine speziell angepasste Formgestaltung des Zwischenkolbens ist nicht erforderlich, so dass der Zwischenkolben entsprechend einfach und kostengünstig ausgestaltet sein kann.

Insbesondere weist der Zwischenkolben eine in axialer Richtung weisende Absatzfläche zwischen einem Bereich des Zwischenkolben mit einem größeren Durchmesser und einem Bereich des Zwischenkolben mit einem kleineren Durchmesser auf, wobei der Geberzylinder hydraulisch, insbesondere über den Ringkolben, an der Absatzfläche angreift. Durch den Übergang zwischen dem größeren Durchmesser und dem kleineren Durchmesser kann eine, insbesondere in Umfangsrichtung umlaufende, Stufe ausgebildet werden, welche die Absatzfläche ausbildet. Die Absatzfläche weist insbesondere in axialer Richtung auf den Ringkolben und/oder den Automatikaktor zu. Die Formgestaltung des Zwischenkolbens ist dadurch einfach und kostengünstig gehalten.

Vorzugsweise ist der Automatikaktor elektromotorisch betreibbar. Der Automatikaktor kann vorzugsweise einen Elektromotor, beispielsweise einen Servomotor, aufweisen, der insbesondere von einer Kraftfahrzeugbatterie des Kraftfahrzeugs mit elektrischer Energie versorgt werden kann. Der Automatikaktor kann dadurch im Bedarfsfall leicht mit ausreichender Energie versorgt werden, um den Zwischenkolben zum Aufbau eines Betätigungsdrucks in den Zwischenzylinder einfahren zu können. Ferner kann der Automatikaktor durch den Elektromotor schnell ansprechbar ausgestaltet sein.

Besonders bevorzugt weist der Automatikaktor einen an dem Zwischenkolben angreifbaren Spindeltrieb auf, wobei der Spindeltrieb insbesondere eine Kugelumlaufspindel aufweist. Durch die Kugelumlaufspindel kann eine geringe Reibung und ein hoher Wirkungsgrad erreicht werden. Der Spindeltrieb kann insbesondere eine Spindel aufweisen, auf der eine Spindelmutter aufgeschraubt sein kann. Vorzugsweise ist die Spindelmutter in axialer Richtung unbeweglich und wird beispielsweise von einem Elektromotor verdreht, so dass die Spindel in axialer Richtung ausgefahren und/oder eingefahren werden kann. Die Spindel kann insbesondere in Betätigungsrichtung axial an dem Zwischenkolben anschlagen, um den Zwischenkolben in den Zwischenzylinder einzufahren.

Insbesondere ist vorgesehen, dass der Automatikaktor bei einer Bewegung in Betätigungsrichtung zum Druckaufbau in dem Zwischenzylinder an dem Zwischenkolben anschlägt und bei einer Bewegung entgegen der Betätigungsrichtung relativ zum Zwischenkolben axial bewegbar ist. Dadurch kann der Automatikaktor nur in Betätigungsrichtung eine Kraft auf den Zwischenkolben ausüben. Wenn der Zwischenkolben durch ein Treten des Kupplungspedals mit Hilfe des Geberzylinders in Betätigungsrichtung axial verlagert wird, braucht der Automatikaktor nicht mitbewegt werden, so dass unnötige Schleppmomente vermieden sind. Insbesondere kann eine Kontaktfläche des Automatikaktors bei einer Betätigung der Kupplung durch ein Treten des Kupplungspedals von einer korrespondierenden Gegenfläche, insbesondere einer axialen Stirnseite des Zwischenkolbens, abheben und dadurch relativ zum Zwischenkolben verlagert werden. Der Fahrer kann dadurch ein ausbleibendes Betätigen der Kupplung manuell overrulen, indem er das Kupplungspedal betätigt. Der Automatikaktor kann dadurch von dem Zwischenkolben entkoppelt werden, so dass der Automatikaktor das manuelle Betätigen der Kupplung durch den Fahrer nicht beeinträchtigt.

Vorzugsweise ist der Automatikaktor von dem Zwischenkolben bei einer Bewegung des Zwischenkolben entgegen der Betätigungsrichtung in eine einem unbetätigten Zustand entsprechende Aktorausgangsstellung mitnehmbar, wobei insbesondere eine Summe der Selbsthemmkraft des Automatikaktors im unbetätigten Zustand des Automatikaktors und der Selbsthemmkraft des Geberzylinders im unbetätigten Zustand des Geberzylinders geringer als eine auf den Zwischenkolben aufgebrachte Rückstellkraft zum Verlagern des Zwischenkolben in eine dem unbetätigten Zustand entsprechende Kolbenausgangsstellung ist. Eine gegebenenfalls vorliegende Selbsthemmkraft eines in einem Ringzylinder geführten Ringkolbens, der von dem Geberzylinder verlagert werden kann, wird hierbei der Selbsthemmkraft des Geberzylinders zugeschlagen. Beispielsweise weist der Zwischenzylinder eine Rückstellfeder auf, die bei einem Einfahren des Zwischenkolbens in den Zwischenzylinder zumindest einen Anteil der Rückstellkraft aufbaut. Zudem kann der im Zwischenzylinder aufgebaute Betätigungsdruck einen Anteil der Rückstellkraft bereitstellen. Im ausgeschalteten Zustand des Automatikaktors kann der Automatikaktor dadurch automatisch in seine Aktorausgangsstellung zurück bewegt werden, ohne dass es hierzu erforderlich ist den Automatikaktor anzusteuern und Energie einzusetzen. Insbesondere in einem Fehlerfall, wenn beispielsweise die Stromversorgung des Automatikaktors ausfällt, kann verhindert werden, dass die Kupplung permanent geöffnet bleibt, obwohl zumindest noch ein manuelles Betätigen der Kupplung mit Hilfe des Kupplungspedals möglich ist.

Besonders bevorzugt ist der Automatikaktor mit einem Schaltelement zum manuellen Aktivieren und/oder Deaktivieren des Automatikaktors verbunden. Dies ermöglicht es dem Fahrer eine Abbildung des Kupplungskomforts eines Automatikgetriebes durch den Automatikaktor bewusst vorzusehen oder auszuschalten. Das Schaltelement kann hierzu beispielsweise in einem von der Hand des Fahrers betätigbaren Steuerfeld vorgesehen sein und/oder von einer Bordelektronik des Kraftfahrzeugs betätigt werden. Zusätzlich oder alternativ kann das Schaltelement auch an einer Stelle positioniert sein, wo es bei einer Fehlbedienung des Fahrers automatisch betätigt wird. Beispielsweise kann das Schaltelement in einer Schaltgasse eines Schaltknüppels vorgesehen sein, so dass das Schaltelement automatisch betätigt wird, wenn der Fahrer den Schaltknüppel zum Gangwechsel in eine Position bewegen will ohne vorher das Kupplungspedal getreten zu haben. Dadurch kann insbesondere eine Handschaltfunktionalität mit einer manuellen Wahl der Schaltpunkte erreicht werden, während der Automatikaktor dem Fahrer das Betätigen der Kupplung abnimmt. Da der Fahrer bei einem Wechsel des Getriebegangs nicht das Kupplungspedal betätigen muss, ist dadurch der Schaltkomfort für den Fahrer erhöht.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische teilgeschnittene Ansicht eines Zwischenblocks einer Kupplungsbetätigungsanordnung und
- Fig. 2:: eine schematische Prinzipdarstellung einer Kupplungsbetätigungsanordnung.

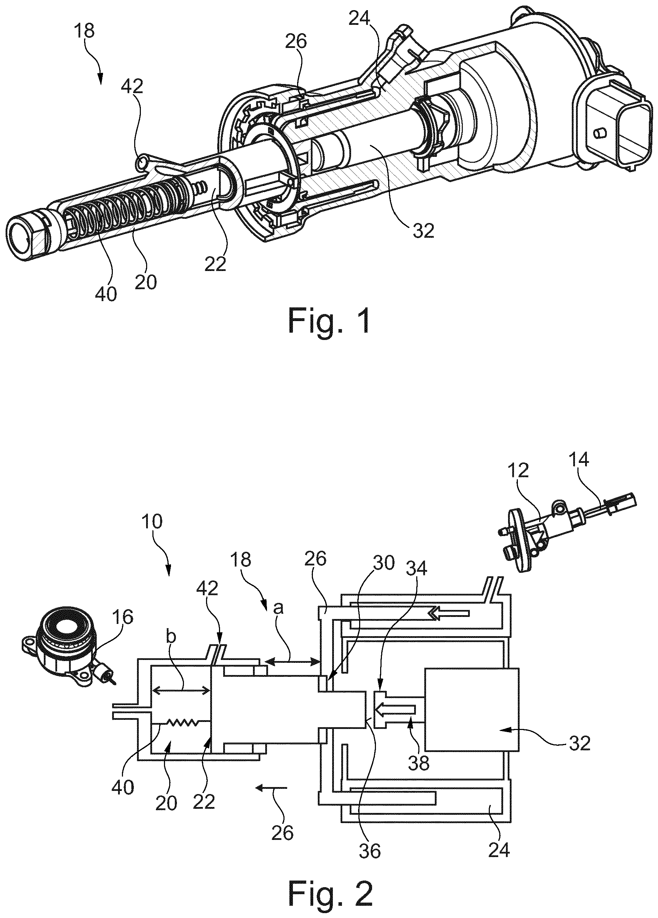

Die Fig. 1 und Fig. 2 dargestellte Kupplungsbetätigungsanordnung 10 weist einen Geberzylinder 12 mit einem in dem Geberzylinder 12 axial geführten Geberkolben 14 auf. Der Geberkolben 14 kann an einem Kupplungspedal eines Kraftfahrzeugs angebunden sein. Mit Hilfe des Geberkolbens 14 kann in dem Geberzylinder 12 beispielsweise ein Hydrauliköl komprimiert werden, um einen Druck aufzubauen. Über das Hydrauliköl ist der Geberzylinder 12 hydraulisch mit einem als CSC ("concentric slave cylinder") ausgebildeten Nehmerzylinder 16 angeschlossen, so dass eine Druckerhöhung im Geberzylinder 12 zu einer Druckerhöhung im Nehmerzylinder 16 führen kann. In dem Nehmerzylinder 16 kann dadurch ein ausreichend hoher Betätigungsdruck aufgebaut werden, um durch einen aus dem Nehmerzylinder 16 ausfahrbaren Betätigungskolben eine Kupplung zum Kuppeln einer Antriebswelle eines Kraftfahrzeugmotors mit mindestens einer Getriebeeingangswelle eines Kraftfahrzeuggetriebes zu öffnen und/oder zu schließen.

In der hydraulischen Strecke zwischen dem Geberzylinder 12 und dem Nehmerzylinder 16 ist an einer im Wesentlichen frei wählbaren Stelle ein Zwischenblock 18 zwischengeschaltet, der als eine separate Baueinheit als Ganzes vormontiert verbaut werden kann. Der Zwischenblock 18 weist einen Zwischenzylinder 20 auf, in dem ein Zwischenkolben 22 axial geführt ist. Der Zwischenzylinder 20 ist an dem Nehmerzylinder 16 angeschlossen. Der Geberzylinder 12 ist mit einem Ringzylinder 24 verbunden, in dem ein Ringkolben 26 axial geführt ist. Bei einem ansteigenden Druck im Geberzylinder 12 steigt auch der Druck in dem Ringzylinder 24, wodurch der Ringkolben 26 entlang einer Betätigungsrichtung 28 aus dem Ringzylinder 24 ausgefahren werden kann. Der Ringzylinder 24 kann bei einer Bewegung entlang der Betätigungsrichtung 28 an einer ringförmigen Absatzfläche 30 des Zwischenkolbens 22 anschlagen. Die Absatzfläche 30 des Zwischenkolbens 22 ist hierbei durch eine Stufe ausgebildet, die sich durch eine sprunghafte Änderung des Durchmessers des Zwischenkolbens 22 ergibt, so dass die Absatzfläche 30 in axialer Richtung auf den Ringzylinder 24 und den Ringkolben 26 zu weist. Der Ringzylinder 26 weist zu dem Zwischenzylinder 20 einen maximalen Abstand a auf, der mindestens so groß wie ein designierter maximaler Stellweg s des Zwischenkolbens 22 in dem Zwischenzylinder 20 ist. Durch das Anschlagen des Ringkolbens 26 an dem Zwischenkolben 22 kann der Zwischenkolben 22 in den Zwischenzylinder 20 einfahren, wodurch sich der Druck in dem Zwischenzylinder 22 und der Druck in dem an den Zwischenzylinder 22 angeschlossenen Nehmerzylinder 16 erhöht. Wenn der Fahrer des Kraftfahrzeugs das Kupplungspedal tritt und dadurch eine Druckerhöhung in dem Geberzylinder 12 herbeiführt, kann über den Zwischenblock 18 und den Geberzylinder 16 die Kupplung betätigt werden, so dass sich die erfindungsgemäße Kupplungsbetätigungsanordnung 10 wie eine herkömmliche Kupplungsbetätigungsanordnung für ein Handschaltgetriebe verhält.

Zusätzlich weist der Zwischenblock 18 einen beispielsweise elektromotorisch betriebenen Automatikaktor 32 auf, der konzentrisch zum Ringzylinder 24 radial innerhalb des Ringzylinder 24 angeordnet ist und insbesondere in radialer Richtung betrachtet von dem Ringzylinder 24 zu einem Großteil oder vollständig verdeckt ist. Der Automatikaktor 32 kann ebenfalls an dem Zwischenkolben 22 angreifen, um den Zwischenkolben 22 in den Zwischenzylinder 20 einzufahren. Hierzu weist der Automatikaktor 32 einen Spindeltrieb auf, der bei einer elektromotorischen Drehung einer Spindelmutter eine insbesondere als Kugelumlaufspindel ausgestaltete Spindel 38 aus- und/oder einfahren kann. Bei einem Ausfahren der Spindel 38 entlang der Betätigungsrichtung 26 kann die Spindel 38 mit einer axialen Kontaktfläche 34 an einer axialen Stirnseite 36 des Zwischenkolbens 22 anschlagen, wodurch sich der Druck in dem Zwischenzylinder 22 und der Druck in dem an den Zwischenzylinder 22 angeschlossenen Nehmerzylinder 16 erhöht. Bei einer Betätigung des Automatikaktors 32 kann die erfindungsgemäße Kupplungsbetätigungsanordnung 10 die Funktionsweise eines Automatikgetriebes abbilden.

Wenn der Automatikaktor 32 den Zwischenkolben 22 entlang der Betätigungsrichtung 26 verlagert, kann der Ringkolben 26 von der Absatzfläche 30 des Zwischenkolbens 22 abheben, so dass der Zwischenkolben 22 relativ zum Ringkolben 26 verlagert werden kann. Wenn der Ringkolben 26 den Zwischenkolben 22 entlang der Betätigungsrichtung 26 verlagert, kann die Spindel 38 des Automatikaktors 32 von der Stirnseite 36 des Zwischenkolben 22 abheben, so dass der Zwischenkolben 22 relativ zum Automatikaktor 32 verlagert werden kann. Falls der Automatikaktor 32 entgegen eines Fahrerwunsches nicht die Kupplung betätigen sollte, kann der Fahrer jederzeit diese Kupplungsstrategie overrulen, indem der Fahrer manuell den Geberzylinder 12 durch ein Treten des Kupplungspedals betätigt und dadurch eine Betätigung, insbesondere ein Öffnen, der Kupplung einleitet. Vorzugsweise wird bei einem im Wesentlichen vollständig in den Geberzylinder 12 eingefahrenen Geberkolben 14 die Spindel 38 des Automatikaktors 32 automatisch in eine Aktorausgangsstellung eingefahren. Ein von dem Fahrer vollständig durchgedrücktes Kupplungspedals kann in diesem Fall als Signal gewertet werden, dass der Fahrer selber kuppeln möchte und eine Unterstützung durch den Automatikaktor 32 aktuell nicht gewünscht ist.

Wenn keine Kraft auf den Zwischenkolben 22 ausgeübt wird, kann der Zwischenkolben 22 beispielsweise mit Hilfe einer in dem Zwischenzylinder 20 vorgesehenen Rückstellfeder 40 in eine gewünschte Kolbenausgangsstellung zurückgedrückt werden. Hierbei kann der Zwischenkolben 22 die Spindel 38 des Automatikaktors 32 in eine Aktorausgangsstellung zurückbewegen. Ferner ist es möglich, dass der Zwischenkolben 22 den Ringkolben 26 in eine Ausgangsstellung zurückbewegt. In der Kolbenausgangsstellung des Zwischenkolbens 22 kann sich der Zwischenkolben 22 in einer Schnüffelposition befinden, in welcher der Zwischenzylinder 20 über eine Schnüffelöffnung 42 beispielsweise mit einem Reservoir für Hydrauliköl zum Druckausgleich kommunizieren kann.

### Bezugszeichenliste

- 10: Kupplungsbetätigungsanordnung
- 12: Geberzylinder
- 14: Geberkolben
- 16: Nehmerzylinder
- 18: Zwischenblock
- 20: Zwischenzylinder
- 22: Zwischenkolben
- 24: Ringzylinder
- 26: Ringkolben
- 28: Betätigungsrichtung
- 30: Absatzfläche
- 32: Automatikaktor
- 34: Kontaktfläche
- 36: Stirnseite
- 38: Spindel
- 40: Rückstellfeder
- 42: Schnüffelöffnung
- a: Abstand
- s: Stellweg

## Patentansprüche

1. Kupplungsbetätigungsanordnung zum Betätigen einer Kupplung zum Kuppeln einer Antriebswelle eines Kraftfahrzeugmotors mit mindestens einer Getriebeeingangswelle eines Kraftfahrzeuggetriebes, mit
einem über ein Kupplungspedal fußbetätigbaren Geberzylinder (12) zur Aufbringung eines hydraulischen und/oder pneumatischen Drucks,
einem hydraulisch an dem Geberzylinder (12) angeschlossenen Nehmerzylinder (16) zum Öffnen und/oder Schließen der Kupplung,
einem hydraulisch zwischen dem Geberzylinder (12) und dem Nehmerzylinder (16) angeordneten Zwischenzylinder (20) zur Aufbringung eines hydraulischen und/oder pneumatischen Betätigungsdrucks zum Betätigen der Kupplung,
einem in dem Zwischenzylinder (20) geführten Zwischenkolben (22), wobei an dem Zwischenkolben (22) der Geberzylinder (12) hydraulisch angreift, und
einem an dem Zwischenkolben (22) angreifenden Automatikaktor (32) zum Verlagern des Zwischenkolbens (22) in dem Zwischenzylinder (20), **dadurch gekennzeichnet, dass** der Automatikaktor (32) im Wesentlichen konzentrisch innerhalb eines mit dem Geberzylinder (12) verbundenen Ringzylinder (24) angeordnet ist, wobei in dem Ringzylinder (24) ein an dem Zwischenkolben (22) angreifbarer Ringkolben (26) geführt ist.

2. Kupplungsbetätigungsanordnung nach Anspruch 1 **dadurch gekennzeichnet, dass** der Ringkolben (26) bei einer Bewegung in Betätigungsrichtung (26) zum Druckaufbau in dem Zwischenzylinder (20) an dem Zwischenkolben (22) anschlägt und bei einer Bewegung entgegen der Betätigungsrichtung (26) relativ zum Zwischenkolben (22) axial bewegbar ist.

3. Kupplungsbetätigungsanordnung nach einem der Ansprüche 1 oder 2, **dadurch gekennzeichnet, dass** der Automatikaktor (32) an einer axialen Stirnseite (36) des Zwischenkolbens (22) angreift.

4. Kupplungsbetätigungsanordnung nach einem der Ansprüche 1 bis 3, **dadurch gekennzeichnet, dass** der Zwischenkolben (22) eine in axialer Richtung weisende Absatzfläche (30) zwischen einem Bereich des Zwischenkolben (22) mit einem größeren Durchmesser und einem Bereich des Zwischenkolben (22) mit einem kleineren Durchmesser aufweist, wobei der Geberzylinder (12) hydraulisch, insbesondere über den Ringkolben (26), an der Absatzfläche (30) angreift.

5. Kupplungsbetätigungsanordnung nach einem der Ansprüche 1 bis 4, **dadurch gekennzeichnet, dass** der Automatikaktor (32) elektromotorisch betreibbar ist.

6. Kupplungsbetätigungsanordnung nach einem der Ansprüche 1 bis 5, **dadurch gekennzeichnet, dass** der Automatikaktor (32) einen an dem Zwischenkolben (22) angreifbaren Spindeltrieb aufweist, wobei der Spindeltrieb insbesondere eine Kugelumlaufspindel (38) aufweist.

7. Kupplungsbetätigungsanordnung nach einem der Ansprüche 1 bis 6, **dadurch gekennzeichnet, dass** der Automatikaktor (32) bei einer Bewegung in Betätigungsrichtung (26) zum Druckaufbau in dem Zwischenzylinder (20) an dem Zwischenkolben (22) anschlägt und bei einer Bewegung entgegen der Betätigungsrichtung (26) relativ zum Zwischenkolben (22) axial bewegbar ist.

8. Kupplungsbetätigungsanordnung nach einem der Ansprüche 1 bis 7, **dadurch gekennzeichnet, dass** der Automatikaktor (32) von dem Zwischenkolben (22) bei einer Bewegung des Zwischenkolben (22) entgegen der Betätigungsrichtung (26) in eine einem unbetätigten Zustand entsprechende Aktorausgangsstellung mitnehmbar ist, wobei insbesondere eine Summe der Selbsthemmkraft des Automatikaktors (32) im unbetätigten Zustand des Automatikaktors und der Selbsthemmkraft des Geberzylinders (12) im unbetätigten Zustand des Geberzylinders (12) geringer als eine auf den Zwischenkolben (22) aufgebrachte Rückstellkraft zum Verlagern des Zwischenkolben (22) in eine dem unbetätigten Zustand entsprechende Kolbenausgangsstellung ist.

9. Kupplungsbetätigungsanordnung nach einem der Ansprüche 1 bis 8, **dadurch gekennzeichnet, dass** der Automatikaktor (32) mit einem Schaltelement zum manuellen Aktivieren und/oder Deaktivieren des Automatikaktors (32) verbunden ist.

## Claims

1. Clutch actuating arrangement for actuating a clutch for coupling a drive shaft of a motor vehicle engine to at least one transmission input shaft of a motor vehicle transmission, having
a master cylinder (12) which can be actuated by foot via a clutch pedal in order to apply a hydraulic and/or pneumatic pressure,
a slave cylinder (16) which is connected hydraulically to the master cylinder (12) in order to open and/or close the clutch,
an intermediate cylinder (20) which is arranged hydraulically between the master cylinder (12) and the slave cylinder (16) in order to apply a hydraulic and/or pneumatic actuating pressure for actuating the clutch,
an intermediate piston (22) which is guided in the intermediate cylinder (20), the master cylinder (12) acting hydraulically on the intermediate piston (22), and
an automatic actuator (32) which acts on the intermediate piston (22) in order to move the intermediate piston (22) in the intermediate cylinder (20), **characterized in that** the automatic actuator (32) is arranged substantially concentrically within an annular cylinder (24) which is connected to the master cylinder (12), an annular piston (26) which can act on the intermediate piston (22) being guided in the annular cylinder (24).

2. Clutch actuating arrangement according to Claim 1, **characterized in that** the annular piston (26) comes into contact with the intermediate piston (22) in the case of a movement in the actuating direction (26) for building up pressure in the intermediate cylinder (20), and can be moved axially relative to the intermediate piston (22) in the case of a movement counter to the actuating direction (26).

3. Clutch actuating arrangement according to either of Claims 1 and 2, **characterized in that** the automatic actuator (32) acts on an axial end side (36) of the intermediate piston (22).

4. Clutch actuating arrangement according to one of Claims 1 to 3, **characterized in that** the intermediate piston (22) has a supporting face (30) which points in the axial direction between a region of the intermediate piston (22) with a greater diameter and a region of the intermediate piston (22) with a smaller diameter, the master cylinder (12) acting on the supporting face (30) hydraulically, in particular via the annular piston (26).

5. Clutch actuating arrangement according to one of Claims 1 to 4, **characterized in that** the automatic actuator (32) can be operated by an electric motor.

6. Clutch actuating arrangement according to one of Claims 1 to 5, **characterized in that** the automatic actuator (32) has a spindle drive which can act on the intermediate piston (22), the spindle drive having, in particular, a recirculating ball spindle (38).

7. Clutch actuating arrangement according to one of Claims 1 to 6, **characterized in that** the automatic actuator (32) comes into contact with the intermediate piston (22) in the case of a movement in the actuating direction (26) for building up pressure in the intermediate cylinder (20), and can be moved axially relative to the intermediate piston (22) in the case of a movement counter to the actuating direction (26).

8. Clutch actuating arrangement according to one of Claims 1 to 7, **characterized in that**, in the case of a movement of the intermediate piston (22) counter to the actuating direction (26), the automatic actuator (32) can be driven by the intermediate piston (22) into an actuator starting position which corresponds to a non-actuated state, a sum of the self-locking force of the automatic actuator (32) in the non-actuated state of the automatic actuator and the self-locking force of the master cylinder (12) in the non-actuated state of the master cylinder (12), in particular, being lower than a restoring force which is applied to the intermediate piston (22) in order to move the intermediate piston (22) into a piston starting position which corresponds to the non-actuated state.

9. Clutch actuating arrangement according to one of Claims 1 to 8, **characterized in that** the automatic actuator (32) is connected to a switching element for the manual activation and/or deactivation of the automatic actuator (32).

## Revendications

1. Système d'actionnement d'embrayage permettant d'actionner un embrayage pour accoupler un arbre d'entraînement d'un moteur de véhicule automobile à au moins un arbre d'entrée de boîte de vitesses d'une boîte de vitesses de véhicule automobile, avec un cylindre émetteur (12) actionnable au pied au moyen d'une pédale d'embrayage pour appliquer une pression hydraulique et/ou pneumatique,
un cylindre récepteur (16) raccordé hydrauliquement au cylindre émetteur (12) pour ouvrir et/ou fermer l'embrayage,
un cylindre intermédiaire (20) disposé hydrauliquement entre le cylindre émetteur (12) et le cylindre récepteur (16) pour appliquer une pression d'actionnement hydraulique et/ou pneumatique pour actionner l'embrayage,
un piston intermédiaire (22) guidé dans le cylindre intermédiaire (20), dans lequel le cylindre émetteur (12) se rattache hydrauliquement au piston intermédiaire (22), et
un actionneur automatique (32) se rattachant au piston intermédiaire (22) pour déplacer le piston intermédiaire (22) dans le cylindre intermédiaire (20), **caractérisé en ce que** l'actionneur automatique (32) est disposé de façon essentiellement concentrique à l'intérieur d'un cylindre annulaire (24) relié au cylindre émetteur (12), dans lequel un piston annulaire (26) rattachable au piston intermédiaire (22) est guidé dans le cylindre annulaire (24).

2. Système d'actionnement d'embrayage selon la revendication 1, **caractérisé en ce que** le piston annulaire (26) bute contre le piston intermédiaire (22) lors d'un mouvement dans la direction d'actionnement (26) pour l'établissement d'une pression dans le cylindre intermédiaire (20) et est déplaçable axialement par rapport au piston intermédiaire (22) lors d'un mouvement à l'inverse de la direction d'actionnement (26).

3. Système d'actionnement d'embrayage selon une des revendications 1 ou 2, **caractérisé en ce que** l'actionneur automatique (32) se rattache à un côté frontal axial (36) du piston intermédiaire (22).

4. Système d'actionnement d'embrayage selon l'une quelconque des revendications 1 à 3, **caractérisé en ce que** le piston intermédiaire (22) présente une face d'épaulement (30) orientée en direction radiale entre une région du piston intermédiaire (22) présentant un plus grand diamètre et une région du piston intermédiaire (22) présentant un plus petit diamètre, dans lequel le cylindre émetteur (12) se rattache hydrauliquement, en particulier au moyen du piston annulaire (26), à la face d'épaulement (30).

5. Système d'actionnement d'embrayage selon l'une quelconque des revendications 1 à 4, **caractérisé en ce que** l'actionneur automatique (32) peut être entraîné par un moteur électrique.

6. Système d'actionnement d'embrayage selon l'une quelconque des revendications 1 à 5, **caractérisé en ce que** l'actionneur automatique (32) présente un mécanisme à broche rattachable au piston intermédiaire (22), dans lequel le mécanisme à broche présente en particulier une vis à billes (38).

7. Système d'actionnement d'embrayage selon l'une quelconque des revendications 1 à 6, **caractérisé en ce que** l'actionneur automatique (32) bute contre le piston intermédiaire (22) lors d'un mouvement dans la direction d'actionnement (26) pour l'établissement d'une pression dans le cylindre intermédiaire (20) et est déplaçable axialement par rapport au piston intermédiaire (22) lors d'un mouvement à l'inverse de la direction d'actionnement (26).

8. Système d'actionnement d'embrayage selon l'une quelconque des revendications 1 à 7, **caractérisé en ce que** l'actionneur automatique (32) peut être entraîné par le piston intermédiaire (22) dans une position de sortie de l'actionneur correspondant à un état non actionné lors d'un mouvement du piston intermédiaire (22) à l'inverse de la direction d'actionnement (26), dans lequel en particulier une somme de la force d'auto-blocage de l'actionneur automatique (32) dans l'état non actionné de l'actionneur automatique et de la force d'auto-blocage du cylindre émetteur (12) dans l'état non actionné du cylindre émetteur (12) est inférieure à une force de rappel appliquée au piston intermédiaire (22) pour déplacer le piston intermédiaire (22) dans une position de sortie du piston correspondant à l'état non actionné.

9. Système d'actionnement d'embrayage selon l'une quelconque des revendications 1 à 8, **caractérisé en ce que** l'actionneur automatique (32) est connecté à un élément de commutation en vue de l'activation et/ou de la désactivation manuelle de l'actionneur automatique (32) .
